# EUROPEAN PATENT SPECIFICATION

(11) **EP 1 166 178 B1**
(45) Date of publication and mention of the grant of the patent: **28.08.2002**
(21) Application number: 00919208.9
(22) Date of filing: 17.03.2000
(51) Int. Cl.: G03B 37/00

(54) **A DIGITAL CAMERA HAVING PANNING AND/OR TILTING FUNCTIONALITY, AND AN IMAGE ROTATING DEVICE FOR SUCH A CAMERA**
DIGITALE KAMERA MIT PANORAMA UND/ODER ROTATIONSFUNKTION, UND SEINE BILDROTATIONSVORRICHTUNG
CAMERA NUMERIQUE AYANT UNE FONCTIONNALITE PANORAMIQUE ET/OU DE ROTATION VERTICALE, ET SON DISPOSITIF DE ROTATION D'IMAGE

(30) Priority: 19.03.1999 SE 9901038
(43) Date of publication of application: 02.01.2002
(73) Proprietor: Axis AB, 223 70 Lund (SE)
(72) Inventor: SAGEFALK, Willy, S-222 40 Lund (SE); ABRAHAMSSON, Lars, S-582 46 Linköping (SE)
(74) Representative: Petri, Stellan
(86) International application number: SE0000522
(87) International publication number: WO00057246

(56) References cited:
- US-A- 3 868 706
- US-A- 4 499 490
- US-A- 5 606 368
- US-A- 5 717 512

## Description

### Technical Field

The present invention relates to a digital camera having panning and/or tilting functionality, and more specifically to a digital camera having a camera housing with an optical input, such as a lens or objective, an image capturing unit and a controller. The invention also relates to an image rotating device for providing the panning and/or tilting functionality of such a digital camera.

### Background Art

A common example of a digital camera with panning and/or tilting functionality is a web camera, which e.g. may be mounted at a given location for the purpose of surveillance, production monitoring, etc. The web camera comprises an optical input in the form of a lens or objective and an image capturing unit for producing a digital image from light received from the optical input. Usually, the image capturing unit comprises a CCD element (Charge Coupled Device). The web camera has software and hardware for allowing the camera to be connected to a given network, such as an Ethernet or Token Ring network. The web camera is arranged to produce digital images at a given rate, such as 1-25 images per second. In order to increase the visual volume covered by the web camera, the camera is provided with mechanical means for panning and/or tilting the camera. Generally speaking, "panning" means rotating the camera by a given angle (normally 0°-360°) in a horizontal plane, and "tilting" means rotating the camera by a given angle (normally 0°-180°) in a vertical plane.

In prior art web cameras the panning and/or tilting functionality is obtained by moving the whole camera or at least the objective thereof. Since the camera and objective have a considerable weight, such an approach involves complex, large and expensive mechanics. Furthermore, the speed at which the camera may be panned or tilted is restricted due to the large mass, that has to be moved accordingly.

### Summary

It is an object of the present invention to provide a digital camera, which allows faster and more accurate panning and/or tilting, thereby allowing the camera to produce more images per time unit. Furthermore, it is an object of the present invention to provide an image rotating device, to be mounted externally to the digital camera, for providing efficient and rapid panning and/or tilting funtionality, without requiring large or expensive mechanics.

The above objects are achieved by providing the digital camera and an image rotating device as set out in the claims.

### Brief Description of the Drawings

A preferred embodiment of the present invention will now be described in more detail, reference being made to the accompanying drawings, in which:
FIG 1 is a schematic block diagram of the overall structure of a digital camera according to the preferred embodiment,
FIG 2 is a first sideview of the image rotating device and the camera, to which it is mounted,
FIG 3 is a second sideview of the image rotating device and the camera shown in FIG 2, and
FIG 4 is a topview of the image rotating device shown in FIGs 2 and 3.

### Detailed Disclosure

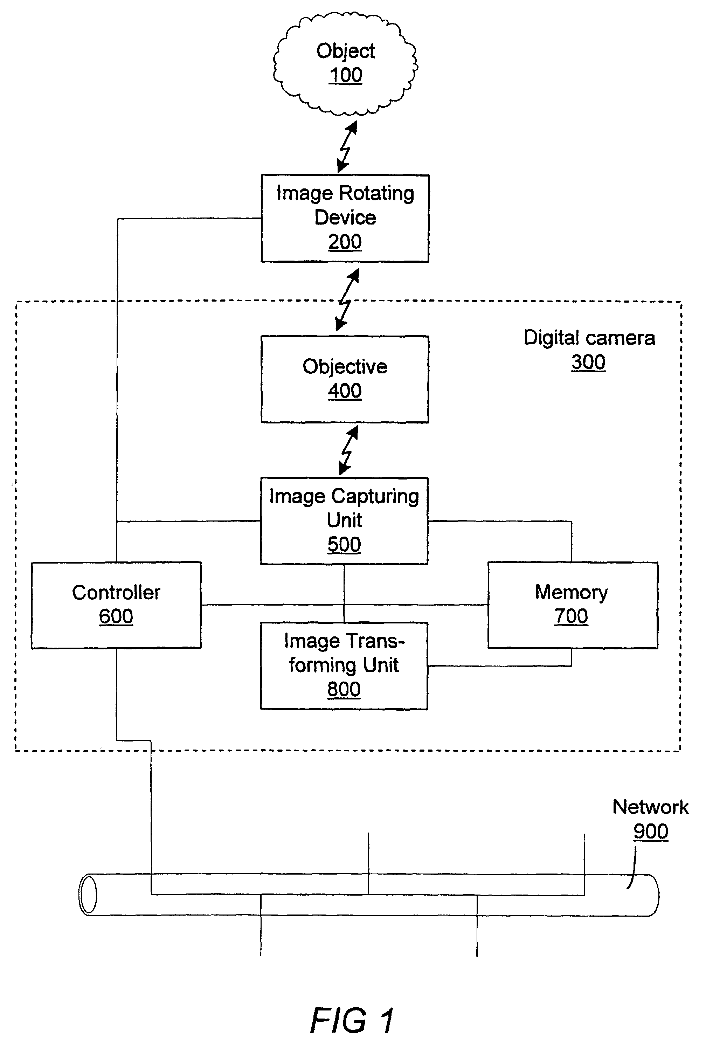

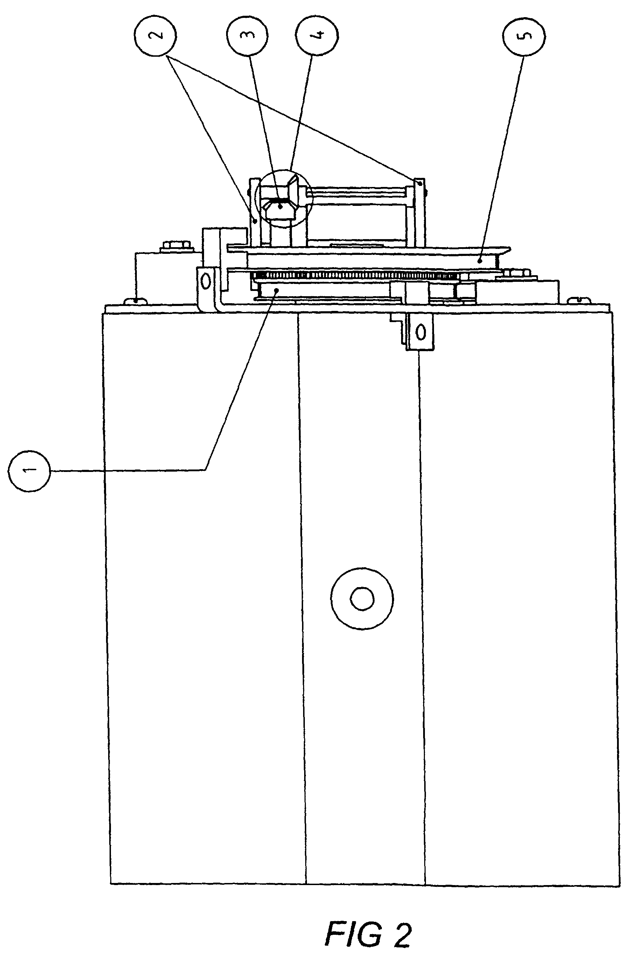

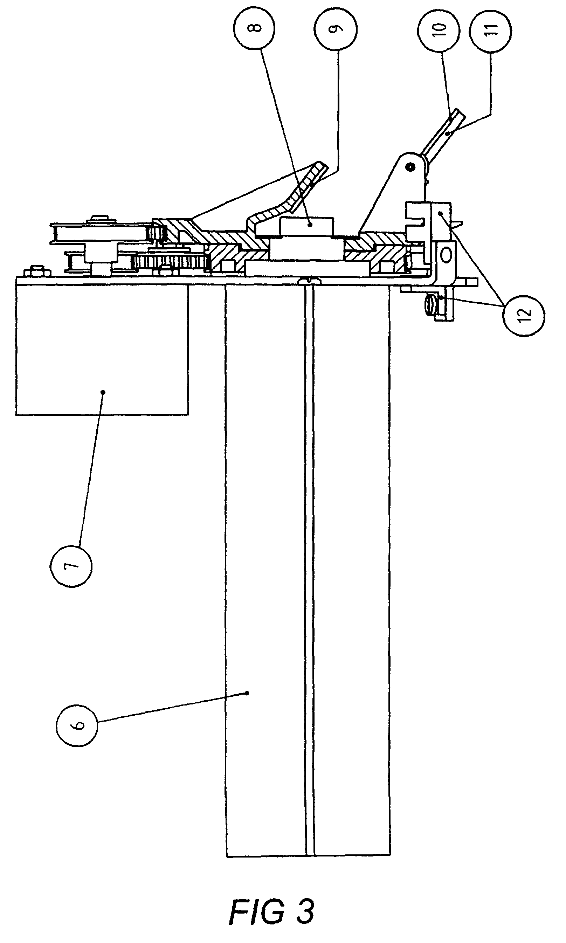

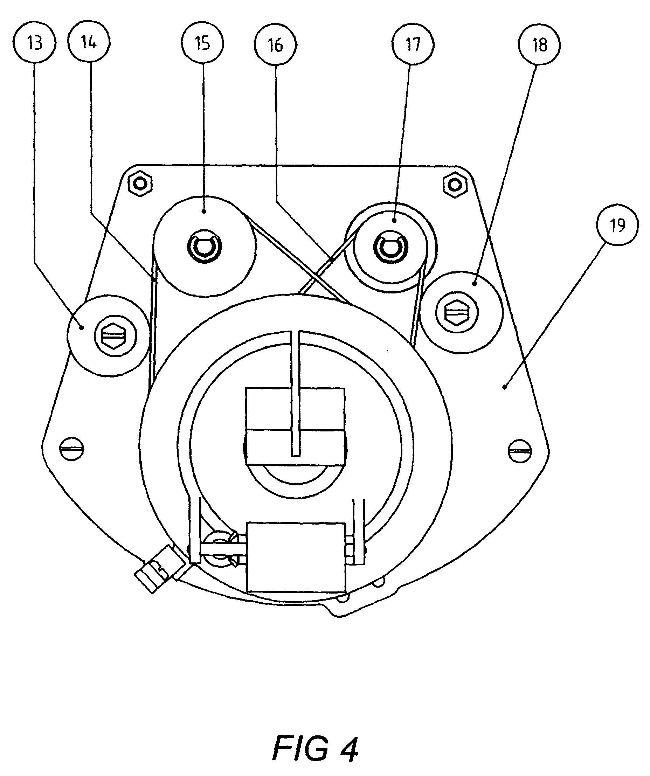

Referring to FIG 1, a digital camera 300 is illustrated in a basic modular form. The digital camera 300 is arranged to produce one or several digital image(s) of a generic object 100, which may be any physical object that is present in a volume optically covered by the digital camera 300. An inventive image rotating device 200 is mounted externally to the digital camera 300 in front of an optical input 400 of the digital camera. The optical input 400 is a generally known lens or objective. The purpose of the image rotating device 200 is to extend the available field of view of the digital camera 300 in at least one plane, preferably in a horizontal plane as well as in a vertical plane. A preferred embodiment of the image rotating device 200 will be described in more detail with reference to FIGs 2-4.

As shown in FIG 1, the digital camera 300 further comprises an image capturing unit 500, which is provided with appropriate means for producing a digital image representative of the object 100. Preferably, the image capturing unit 500 comprises a CCD element (Charge Coupled Device), the internal structure of which is believed to be well-known to a man skilled in the art. The digital camera 300 also has a controller 600 for controlling the image capturing unit 500 as well as the external image rotating device 200. The controller 600 is operatively connected not only to the device 200 and the unit 500 but also to a digital memory 700 for storing images captured by the image capturing unit 500. Furthermore, the digital camera 300 may comprise an image transforming unit 800, the purpose of which is to rotate the digital image to compensate for image rotating effects caused by the image rotating device 200, when the field of view is panned or tilted. The image transforming unit 800 is responsive to an angle of rotation of the image rotating device 200 with respect to the objective 400 and uses this angle of rotation when transforming the digital image to compensate for the current pan and/or tilt angle. To perform such image transforming, i.e. to rotate a digital image in one or more than one direction, is believed to be well within reach of a man skilled in the art of digital cameras. Therefore, the internal structure of the image transforming unit 800 will not be described herein.

The memory 700 may be implemented by any commercially available memory, such as an EEPROM memory.

As indicated in FIG 1, the digital camera 300 may be connected to a network 900, such as an Ethernet or Token Ring network, which in turn may be part of the Internet. In such an application, the controller 600 of the digital camera 300 is provided with appropriate software for allowing the digital camera 300 to act as a web camera available on the network 900, i.e. a web server that produces digital images.

The pan and/or tilt angle of the digital camera 300, or more specifically the angle(s) by which the image rotating device changes the field of view of the camera 300 with respect to a central axis of the objective 400, may be set and changed by a user of the camera by accessing the controller 600 through the network 900. Alternatively, the pan and/or tilt angle(s) may be controlled from a computer directly connected to the digital camera 300.

A preferred embodiment of the image rotating device 200 will now be described in more detail with reference to FIGs 2-4. The following elements are shown in these drawings:

| **Qty** | **Ref. No.** | **Name** |
|---|---|---|
| 1 | 19 | Frame |
| 1 | 18 | Timing belt tightener |
| | | |
| 1 | 17 | Belt wheel |
| 1 | 16 | Timing belt |
| 1 | 15 | Belt wheel |
| 1 | 14 | Timing belt |
| 1 | 13 | Timing belt tightener |
| | | |
| 2 | 12 | Optical sensor |
| 1 | 11 | Mirror holder |
| 1 | 10 | Tilting mirror |
| 1 | 9 | Fixed mirror |
| 1 | 8 | Camera lens (objective) |
| | | |
| 2 | 7 | Motor |
| 1 | 6 | Camera housing |
| 1 | 5 | Mirror wheel |
| 1 | 4 | Bevel gear |
| 1 | 3 | Tilt shaft |
| 2 | 2 | Fixing part |
| 1 | 1 | Guiding wheel |

The image rotating device 200 has a mirror system, comprising a first fixed mirror 9 and a second tilting mirror 10. The fixed mirror 9 is mounted directly in front of the objective 8 at an angle of 37° relative to the optical center axis of the camera 300. The fixed mirror 9 is mounted to a mirror wheel 5, which is rotatable around the objective and hence provides a field of view with an angle of rotation of between 0° and 360°.

In the center of the field of view the tilting mirror 10 is mounted, so that the axis of rotation thereof is perpendicular to the optical center axis of the camera. The tilting mirror 10 is carried on the mirror wheel 5, thereby causing the tilting mirror 10 to rotate around the objective 8 together with the fixed mirror 9. Thanks to the geometrical arrangement of the mirrors 9 and 10 with respect to the objective 8, it is possible to monitor a large volume in a short time.

The tilting mirror 10 is attached to a mirror holder 11, which in turn is journalled in the mirror wheel 5 between two fixing parts 2. Opposite to the mirror wheel 5 a slightly smaller guiding wheel 1 is concentrically mounted. A tilt shaft 3 is eccentrically mounted to the mirror wheel, so as to cause the tilting mirror 10 to move. The guiding wheel 1 transmits its motion to the tilt shaft 3 and from the tilt shaft 3 through a bevel gear 4 to the mirror holder 11. The arrangement resembles a planetary gear, where the guiding wheel represents a sun pinion and the tilt shaft represents a planet pinion. The mirror wheel acts as holder of the planet pinion.

When the mirror wheel does not move, if the guiding wheel is rotated, the tilt shaft 3 will rotate around its own axis, wherein the mirror holder 11 will be rotated around its axis of rotation. Hence, the tilting mirror 10 is rotated with respect to the mirror wheel 5, and the center axis of the field of view will be angled with respect to the optical center of the camera. If the mirror wheel 5 and the guiding wheel 1 rotates at the same angular velocity, there will be no relative motion in the tilt shaft and consequently no rotation of the mirror holder/mirror around its axis of rotation. However, the mirror wheel 5 as a whole will rotate with the fixed mirror 9 and the tilting mirror 10 at a constant angle to the optical center axis of the camera.

In other words, by rotating the mirror wheel 5 and the guiding wheel 1 synchronously, the field of view may be rotated 360° for any given tilt angle. Then, if the wheels are rotated relative to each other, the angle of the mirror holder 11 will change, and the field of view may be again be rotated 360° for a new tilt angle. In this way, a very large volume around the camera may be covered, and images may be obtained for any given location within this large volume.

The mirror wheel 5 and the guiding wheel 1 are driven by respective motors 7. Belt wheels 15, 17, timing belts 14, 16 and timing belt tighteners 13, 18 are provided, as shown in FIGs 2-4.

The inventive image rotating device provides at least the following advantages:
- Low moment of inertia for rotating parts
- High pan/tilt adjustment speed, short time between angular settings
- High setting accuracy
- Compact design
- Few structural components
- Low manufacturing cost
- Flexible design
- Simple pan/tilt control
- Wide field of view

The present invention has been described above with reference to a preferred embodiment. However, other embodiments than the one disclosed herein are possible within the scope of the invention, as defined by the appended independent patent claims.

## Claims

1. A digital camera (300) having panning and/or tilting functionality, comprising: a camera housing (6) with an optical input (400), such as a lens or objective (8) ; an image capturing unit (500) for producing a digital image from light received through the optical input; a controller (600); a first mirror (9) mounted externally to the camera housing (6); and an image rotating device (200), which is connected to the controller (600) and is adapted to rotate the first mirror at an angle of rotation with respect to the optical axis of the input (400, 8) of the camera housing (6), **characterized by**
an image transforming unit (800), which is connected to the image capturing unit (500) and is adapted to rotate the digital image, as captured by the image capturing unit (500), by an angle related to the angle of rotation of the first mirror (9).

2. A digital camera as in claim 1, further comprising a second mirror (10) mounted externally to the camera housing (6), wherein the image rotating device (200) is adapted to rotate the second mirror at a second angle of rotation with respect to the optical input (400, 8) of the camera housing (6).

3. An image rotating device (200) for a digital camera (300) having a camera housing (6), an optical input (400), such as a lens or objective (6), and an image capturing unit (500) for producing a digital image from light received through the optical input, the image rotating device comprising a first mirror (9) mounted externally to the camera housing (6), and a first rotational member (5, 7) for rotating the first mirror at a first angle of rotation with respect to the optical axis of the input (400, 8) of the camera housing, **characterized by**
a second mirror (10) mounted externally to the camera housing (6); and
a second rotational member (3, 7) for rotating the second mirror at a second angle of rotation with respect to the optical input (400, 8) of the camera housing,
wherein the first and second mirrors are arranged along a common optical axis.

## Patentansprüche

1. Digitale Kamera (300) mit Panorama - und/oder Verkipp-Funktion, mit: einem Kameragehäuse (6) mit einem optischen Eingang (400), so wie einer Linse oder einem Objektiv (8); einer Bildaufnahmeeinheit (500) zum Erzeugen eines digitalen Bildes aus Licht, dass durch den optischen Eingang empfangen worden ist; einem Controller (600); einem ersten Spiegel (9), der extern an dem Kameragehäuse (6) angebracht ist; und einer Bild-Rotationsvorrichtung (200), die mit dem Controller (600) verbunden ist und so ausgelegt ist, daß sie den ersten Spiegel um einen Drehwinkel in Bezug auf die optische Achse des Eingangs (400, 8) des Kameragehäuses (6) dreht, **gekennzeichnet durch**
eine Bild-Transformationseinheit (800), die mit der Bildaufnahmeeinheit (500) verbunden ist und so ausgelegt ist, daß sie das digitale Bild, wenn es von der Bildaufnahmeeinheit (500) aufgenommen wird, um einen Winkel dreht, der in Bezug zu dem Drehwinkel des ersten Spiegels (9) steht.

2. Digitale Kamera nach Anspruch 1, die weiterhin einen zweiten Spiegel (10) aufweist, der außen an der Kameragehäuse (6) angebracht ist, wobei die Bild-Rotationsvorrichtung (200) so ausgelegt ist, daß sie den zweiten Spiegel um einen zweiten Drehwinkel in Bezug auf den optischen Eingang (400, 8) des Kameragehäuses (6) dreht.

3. Bild-Rotationsvorrichtung (200) für eine digitale Kamera (300) mit einem Kameragehäuse (6), einem optischen Eingang (400), so wie einer Linse oder einem Objektiv (8), und einer Bildaufnahmeeinheit (500) zum Erzeugen eines digitalen Bildes aus Licht, das durch den optischen Eingang empfangen worden ist, wobei die Bild-Rotationsvorrichtung einen ersten Spiegel (9), der außen an dem Kameragehäuse (6) angebracht ist, und einem ersten Drehelement (5, 7) zum Drehen des ersten Spiegels um einen ersten Drehwinkel in Bezug auf die optische Achse des Eingangs (400, 8) des Kameragehäuses aufweist, **gekennzeichnet durch**
einen zweiten Spiegel (10), der außen an dem Kameragehäuse (6) angebracht ist; und
ein zweites Drehelement (3, 7) zum Drehen des zweiten Spiegels um einen zweiten Drehwinkel in Bezug auf den optischen Eingang (400, 8) des Kameragehäuses,
wobei der erste und der zweite Spiegel entlang einer gemeinsamen optischen Achse angeordnet sind.

## Revendications

1. Caméra numérique (300) possédant une fonctionnalité de vue panoramique et/ou d'inclinaison, comprenant : un logement de caméra (6) avec une entrée optique (400), telle qu'une lentille ou un objectif (8) ; une unité de capture d'images (500) pour produire une image numérique à partir d'une lumière reçue à travers l'entrée optique ; un contrôleur (600) ; un premier miroir (9) monté, à l'extérieur, du logement de caméra (6) ; et un dispositif pour faire tourner l'image (200), qui est connecté au contrôleur (600) et est adapté pour faire tourner le premier miroir selon un angle de rotation par rapport à l'axe optique de l'entrée (400, 8) du logement de caméra (6), **caractérisé par** une unité de transformation des images (800), qui est connecté à l'unité de capture des images (500) et est adapté pour faire tourner l'image numérique, comme capturée par l'unité de capture des images (500), selon un angle relatif à l'angle de rotation du premier miroir (9).

2. Caméra numérique selon la revendication 1 **caractérisé en ce qu'**elle comprend en outre un second miroir (10), monté à l'extérieur du logement de caméra (6), dans lequel le dispositif pour faire tourner l'image (200) est adapté pour faire tourner le second miroir selon un second angle de rotation par rapport à l'entrée optique (400, 8) du logement de caméra (6).

3. Dispositif pour faire tourner une image (200) pour une caméra numérique (300) ayant un logement de caméra (6), une entrée optique (400), telle qu'une lentille ou un objectif (8), et une unité de capture d'images (500) pour produire une image numérique à partir de la lumière reçue à travers l'entrée optique, le dispositif pour faire tourner l'image comprenant un premier miroir (9) monté à l'extérieur du logement de caméra (6), et un premier élément de rotation (5, 7) pour faire tourner le premier miroir selon un angle de rotation par rapport à l'axe optique de l'entrée (400, 8) du logement de caméra, **caractérisé par** :
- un second miroir (10) monté à l'extérieur du logement de caméra (6) ; et
- un second élément de rotation (3, 7) pour faire tourner le second miroir à un second angle de rotation par rapport à l'entrée optique (400, 8) du logement de caméra,
dans lequel le premier et le second miroir sont disposés le long d'un axe optique commun.
